# EUROPÄISCHE PATENTSCHRIFT

(11) **EP 3 935 869 B1**
(45) Veröffentlichungstag und Bekanntmachung des Hinweises auf die Patenterteilung: **18.01.2023**
(21) Anmeldenummer: 20708053.2
(22) Anmeldetag: 25.02.2020
(51) Int. Cl.: H04R 1/44, G01V 1/18, B06B 1/06

(54) **HAFTVERMITTLER FÜR PIEZOKERAMISCHES HYDROPHON**
ADHESION PROMOTER FOR PIEZO ELECTRIC HYDROPHONE
PROMOTEUR D'ADHÉSION POUR HYYDROPHONE PIEZO ELECTRIQUE

(30) Priorität: 04.03.2019 DE 102019202889
(43) Veröffentlichungstag der Anmeldung: 12.01.2022
(73) Patentinhaber: ATLAS ELEKTRONIK GmbH, 28309 Bremen (DE); thyssenkrupp AG, 45143 Essen (DE)
(72) Erfinder: HADLER, Christoph, 38106 Braunschweig (DE); VAN HEIJST, Jeroen, 26129 Oldenburg (DE); SCHWARZ, Jan-Philip, 28329 Bremen (DE)
(74) Vertreter: thyssenkrupp Intellectual Property GmbH
(86) Internationale Anmeldenummer: PCT/EP2020/054824
(87) Internationale Veröffentlichungsnummer: WO 2020/178063

(56) Entgegenhaltungen:
- EP-A1- 0 100 889
- DE-A1-102008 029 269
- DE-A1-102015 200 277

## Beschreibung

Die Erfindung betrifft ein piezokeramisches Hydrophon, ein Passivsonar, ein Überwasserfahrzeug oder Unterwasserfahrzeug umfassend das erfindungsgemäße Passivsonar, ein Verfahren zur Herstellung eines Piezokeramisches Hydrophons und die Verwendung des piezokeramisches Hydrophons.

Unterwasserortungssysteme wie SONAR (sound navigation and ranging) Systeme werden seit über hundert Jahren vor allem in militärischen Anwendungen eingesetzt. Hierbei ist im Wesentlichen zwischen aktiven und passiven (Sonar-) Ortungssystemen zu unterscheiden. Während aktive Systeme, beispielsweise das während des zweiten Weltkrieges entwickelte ASDIC System (Anti Submarine Detection Investigation Committee), Schallwellen aussenden und empfangen, werden in passiven Systemen nur die von der Umgebung emittierten Signale empfangen und anschließend ausgewertet. Der Vorteil passiver Systeme liegt darin, dass diese keine selbst lokalisierbaren Signale aussenden. Allerdings gestaltet sich die präzise räumliche Ortung von Unterwasserobjekten alleine über passive Systeme schwieriger. Bei vielen Über- und Unterwasserfahrzeugen kommen daher in der Regel und in Abhängigkeit vom Aufgabenprofil sowohl passive als auch aktive Sonarsysteme zum Einsatz.

In bekannten Hydrophonen sind zwei Hohlkugelhälften zu einer Hohlkugel verbunden. Die DE 102 12 291 C1 und US 6,029,113 A offenbaren aus einem piezokeramischen Material bestehende Hohlkugelhälften. Die Hohlkugelhälften sind entgegengesetzt polarisiert und von jeder Hohlkugel ist eine innere und äußere Elektrode über einen Widerstand an einen invertierten Spannungsverstärker angeschlossen. Einen beispielhaften Aufbau eines Hydrophons findet sich auch in der DE 10 2008 029 269 A1, [0002], [0007]-[0008] und [0018]-[0024].

Die eigentliche Hohlkugel wird noch häufig mit einer Polymerummantelung gegenüber äußeren Einflüssen wie Feuchtigkeit und Schmutz abgeschirmt. Diese Polymerummantelung muss im Hinblick auf Schallgeschwindigkeit und die Langzeitstabilität des Materials auf den Einsatz in Verbindung mit einem Hydrophon abgestimmt sein.

Die Effektivität und Abschirmung der Polymerummantelung hängt im großen Maße von der Verbindung zur Keramikoberfläche der Hohlkugel ab. Aufgrund der unterschiedlichen Materialeigenschaften von keramischer Oberfläche und der Oberfläche der Polymerummantelung ist in vielen Fällen ein zusätzlicher Haftvermittler erforderlich. Diese Haftvermittler müssen eine sichere, beständige und feste Verbindung zwischen der keramischen Oberfläche und der Polymerummantelung sicherstellen. Aufgrund des Einsatzes in einer feuchten, salzwasserhaltigen, Umgebung welche zudem noch signifikanten Temperaturschwankungen aufweisen kann, muss der Haftvermittler zudem eine hohe Langzeitstabilität im Hinblick auf chemische und mechanische Belastungen aufweisen.

Für den genannten Einsatzzweck sind verschiedene Haftvermittler, z.B. "Passirex" (ggf. registrierte Marke), insbesondere auf Basis von Cr(VI) Verbindungen bekannt, Das karzinogene Potential von Cr(VI) - Verbindungen ist schon seit längerer Zeit bekannt. Insbesondere bei der Herstellung des Hydrophons ist eine Exposition der Mitarbeiter mit den Cr(VI)- Verbindungen nicht vollständig auszuschließen. Zudem ist auch eine Freisetzung der Cr(VI)- Verbindung während des Einsatzes oder der Wartung möglich. Auch die fachgerechte spätere Entsorgung wird durch Cr(VI)- Verbindungen aufwändiger und teurer. Der Ausdruck Cr(VI)-Verbindungen bezieht sich auf Verbindungen von Chrom in der Oxidationsstufe plus sechs. Dies schließt Salze, Komplexverbindungen, Schmelzen und Lösungen mit ein.

Im Zuge der Verordnung (EG) Nr. 1907/2006, "REACH-Verordnung", wurden die Anforderungen im Bereich des Einsatzes von, häufig im Einsatz bewährter, gesundheitsschädlicher Stoffe deutlich angehoben. Aufgrund der im Zulassungsverfahren erforderlichen Risikobewertung müssen viele Verbindungen, gegen unkritischere Verbindungen ausgetauscht werden.

US 6,029,113 A offenbart den Aufbau eines differential Hydrophons umfassend eine keramische Kugel aus zwei piezoelektrischen Halbkugeln. Die Anordnung ermöglicht die Registrierung akustischer Signale, welche durch Änderungen des Wasserdruckes hervorgerufen werden, und deren Umwandlung in elektrische Signale.

DE 102 12 291 C1 offenbart eine Unterwasserantenne mit mindestens einem Hydrophon und einer dem Hydrophon zugeordneten, symmetrischen, elektrischen Verstärkungsschaltung.

DE 10 2008 029 269 A1 offenbart ein Hydrophon für einer Unterwasserantenne, welches zwei zu einer Hohlkugel zusammengesetzte Kugelhalbschalen aus radial polarisierten, piezoelektrischen Material und die inneren und äußeren Schalenflächen bedeckende Elektroden aufweist. Die Kugelhalbschalen sind mit ihren Schalenrändern spiegelsymmetrisch an der Unter- und Oberseite einer Trägerseite befestigt.

EP 0 099 643 A2 offenbart hochdämpfende Polymerzusammensetzung umfassend ein segmentiertes Blockpolymer aus Polyurethan und einem Elastomer mit einer Glastemperatur im Bereich von -40 °C bis + 15 °C. Des Weiteren wird ein Schleppsonar umfassend ein aus der genannte Polymerzusammensetzung bestehendes Rohr offenbart. Innerhalb des Rohres ist eine Vielzahl von Hydrophonen angeordnet.

Die vorliegende Erfindung hat die Aufgabe einen Haftvermittler für ein Hydrophon bereitzustellen, welcher eine sichere und zuverlässige Haftung der Polymerummantelung auf der keramischen Oberfläche der Kugel erlaubt. Gleichzeitig sollten keine gesundheitsschädlichen Komponenten enthalten sein.

Die Aufgabe der Erfindung wird überraschenderweise durch eine Piezokeramisches Hydrophon gemäß Anspruch 1 gelöst. Weitere vorteilhafte Ausgestaltungen finden sich in den abhängigen Ansprüchen.

Die Erfindung umfasst des Weiteren ein Passivsonar umfassend das erfindungsgemäße piezokeramisches Hydrophon.

Die Erfindung beinhaltet ein Überwasserfahrzeug oder Unterwasserfahrzeug umfassend das erfindungsgemäße Passivsonar.

Die Erfindung umfasst außerdem ein Verfahren zur Herstellung eines Piezokeramisches Hydrophon.

Die Erfindung umfasst des Weiteren die Verwendung des erfindungsgemäßen piezokeramisches Hydrophon in Kriegs- und Forschungsschiffen, bevorzugt U-Booten, ASW (anti-Submarine-warfare)-Hubschraubern, Sonarbojen, Fregatten, Zerstörern, Korvetten, Schnellboten und/oder Tauchrobotern.

Das erfindungsgemäße piezokeramisches Hydrophon mindestens umfassend die folgenden Elemente. Eine erste Kugelhalbschale und eine zweite Kugelhalbschale sind zu einer Hohlkugel zusammengesetzt. Der Ausdruck "Kugelhalbschale" umfasst bevorzugt im Sinne der Erfindung eine Halbkugel mit innerem Hohlraum. Bevorzugt umfasst/bildet der innere Hohlraum 10 % bis 90 % des Halbkugelvolumens, beispielsweise bezogen auf eine

Wandstärke von 0,5 mm bis 4 mm, bevorzugt 0,8 mm bis 2 mm. Ein beispielhafter Aufbau eines Hydrophons findet sich unter anderen in der DE 10 2008 029 269 A1, Paragraph [0018] bis [0022]. Die erste Kugelhalbschale und die zweite Kugelhalbschale umfassen ein radial polarisiertes, piezoelektrisches Material, beispielsweise Blei-Zirkonat-Titanat (PZT). Die erste Kugelhalbschale und die zweite Kugelhalbschale weisen eine Außenschicht auf. Der Ausdruck "Außenschicht" umfasst bevorzugt im Sinne der Erfindung eine zu mindestens teilweise Beschichtung der Kugelhalbschalenflächen. Der Ausdruck "teilweise" umfasst im Sinne der Erfindung eine Beschichtung bevorzugt von mindestens 30 %, besonders bevorzugt mindestens 75 % der nach Kugelhalbschalen(-ober-)flächen. Zur Vermeidung eines Kurzschlusses können einzelne Abschnitte Kugelhalbschalenflächen der ersten Kugelhalbschale und der zweiten Kugelhalbschale ohne Außenschicht (Beschichtung) ausgeführt sein oder mit einer dazwischen angeordneten Isolierschicht oder einen isolierenden Element ausgeführt sein. Dies umfasst beispielsweise bevorzugt die Verbindungsfläche der beiden Kugelhalbschalen zueinander. Der Ausdruck "Außenschicht" umfasst im Sinne der Erfindung bevorzugt eine Beschichtung auf der Oberfläche der Kugelhalbschale, besonders bevorzugt die inneren und äußeren Schalenoberflächen der jeweiligen Kugelhalbschale. Die Außenschicht weist Silber und/oder Siliziumverbindungen auf, bzw. gleichbedeutend mit "enthält" Silber und/oder Siliziumverbindungen. Des Weiteren umfasst das erfindungsgemäße Hydrophon eine elektrische Kontaktierung der ersten Kugelhalbschale und der zweiten Kugelhalbschale. Eine Polymerummantelung umschließt die Hohlkugel und verhindert bzw. verlangsamt das Eindringen von Feuchtigkeit oder Schmutz. Das erfindungsgemäße Hydrophon ist dadurch gekennzeichnet, dass die Außenschicht über einen Haftvermittler mit der Polymerummantelung verbunden ist. Der Haftvermittler (bevorzugt Definitionen auch wie in "Römpp Chemie Lexikon, 9. Auflage, Bd. 3, S.1704, 1995" beschrieben) umfasst bzw. enthält eine Verbindung der Formel (M¹)₂[(M²)F₆] mit M¹ = H, NH₄, Li, Na, K, Rb, Cs und M² = Ti, Zr. Der erfindungsgemäße Haftvermittler erlaubt somit einen Verzicht auf Cr(VI) Verbindungen bei vergleichbarer oder besserer Haltbarkeit.

In einer bevorzugten Ausführungsform umfasst das radial polarisierte, piezoelektrische Material Blei-Zirkonat-Titanat (PZT).

Bevorzugt enthält die Polymerummantelung Silikone, Polyester, Polyether, Polyamide enthält, besonders bevorzugt Polyurethane. Besonders bevorzugt enthält die Polymerummantelung Konservierungsstoffe, Stabilisatoren (beispielsweise Oxidations- und UV-Stabilisatoren und/oder Weichmacher.

In einer bevorzugten Ausführungsform enthält der Haftvermittler Anti-Korrosionsmittel.

Bevorzugt erfolgt die elektrische Kontaktierung der ersten Kugelhalbschale und der zweiten Kugelhalbschale über Lötstellen.

Die Erfindung umfasst des Weiteren ein Passivsonar umfassend ein wie voranstehend beschriebenes, erfindungsgemäßes piezokeramisches Hydrophon. Das Passivsonar oder auch Elektroakustische Unterwasserantenne wird bevorzugt in Unter- und Überwasserfahrzeugen eingesetzt. Beispiele für einen entsprechenden Aufbau, z.B. als eine an der Außenhaut befestigte Seitenantenne oder auch Elektroakustische Unterwasserantenne, finden sich in der DE 10 2004 037 987 A1 in Paragraph [0013] bis [0022].

In einer weiteren Ausgestaltung umfasst die Erfindung ein Überwasserfahrzeug oder Unterwasserfahrzeug umfassend ein wie voranstehend beschriebenes erfindungsgemäßes Passivsonar. Beispiele für bevorzugte Überwasserfahrzeuge oder Unterwasserfahrzeuge sind U-Boote, U-Boote mit AIP (Außenluftunabhängige Antriebsanlage/air-independent-propulsion) Antrieb, ASW (anti-Submarine-warfare)-Hubschrauber, Sonarbojen, Fregatten, Zerstörer, Korvetten, Schnellbote und/oder Tauchroboter.

Die Erfindung umfasst des Weiteren ein Verfahren zur Herstellung eines piezokeramisches Hydrophons mindestens umfassend die folgenden Schritte. In einem ersten Schritt wird eine Außenschicht umfassend Silber und/oder Siliziumverbindungen auf einer ersten Kugelhalbschale und einer zweiten Kugelhalbschalen aufgetragen. Das Auftragen kann beispielsweise über ein Auftragen mittels Pinsel, Sprühverfahren, Tauchverfahren oder auch über PVD (physical-vapor-deposition) oder CVD (chemical-vapor-depostion) erfolgen. In einem folgenden Schritt wird die Außenschicht gesintert und/oder 'kalziniert. Anschließend wird ein Haftvermittler umfassend eine Verbindung der Formel (M¹)₂[(M²)F₆] mit M¹ = H, NH₄, Li, Na, K, Rb, Cs und M² = Ti, Zr auf der Außenschicht vor oder nach einem Zusammenfügen der ersten Kugelhalbschale und der zweiten Kugelhalbschalen zu einer Hohlkugel aufgetragen. Das Auftragen des Haftvermittlers, beispielsweise in Form einer wässrigen Lösung, kann beispielsweise mittels Pinsel, Sprühverfahren, Tauchverfahren oder auch über PVD (physical-vapor-deposition) oder CVD (chemical-vapor-depostion) erfolgen.

Bevorzugt wird der Haftvermittler nach dem Auftragen getrocknet. Weiterhin erfolgt noch eine elektrische Kontaktierung der der ersten Kugelhalbschale und der zweiten Kugelhalbschalen vor oder nach dem Zusammenfügen der ersten Kugelhalbschale und der zweiten Kugelhalbschalen zu einer Hohlkugel. Abschließend wird eine Polymerummantelung, beispielsweise aus Polyurethan, um (bevorzugt abschließend um) die Hohlkugel angebracht. Das Anbringen kann beispielsweise über einfüllen und aushärten eines 2 Komponenten Polyurethans erfolgen, beispielsweise ein Gießverfahren eines 2-Komponentensystems.

Bevorzugt wird die Oberfläche der ersten Kugelhalbschale und/oder der zweiten Kugelhalbschalen uund/oder der ganzen Hohlkugel vor dem Auftragen der Außenschicht grundgestrahlt. Besonders bevorzugt wird die Oberfläche der ersten Kugelhalbschale und/oder der zweiten Kugelhalbschalen vor dem Auftragen der mit Korund grundgestrahlt. Überraschenderweise hat sich gezeigt, dass eine Grundstrahlung, insbesondere mit Korund, die Haftung der Polymerummantelung auf dem Haftvermittler und der Außenschicht merklich verbessert und erhöht.

In einer bevorzugten Ausführungsform erfolgt das Auftragen des Haftvermittlers über Sprühverfahren, Tauchverfahren und/oder Pinselverfahren.

Die Erfindung umfasst des Weiteren die Verwendung des voranstehend beschriebenen, erfindungsgemäßen piezokeramisches Hydrophon und/oder erfindungsgemäßen Passivsonar in Kriegs- und Forschungsschiffen, bevorzugt U-Booten, U-Booten mit AIP (air-independent-propulsion) Antrieb, ASW (anti-submarine-warfare)-Hubschraubern, Sonarbojen, Fregatten, Zerstörern, Korvetten, Schnellboten und/oder Tauchrobotern.

Des Weiteren wird die Erfindung anhand der folgenden Figur näher erläutert. Die Figur beschränkt dabei nicht den Schutzumfang der Erfindung, sondern dient nur der beispielhaften Erläuterung. Die Figur ist nicht maßstabsgetreu.

Es zeigt:

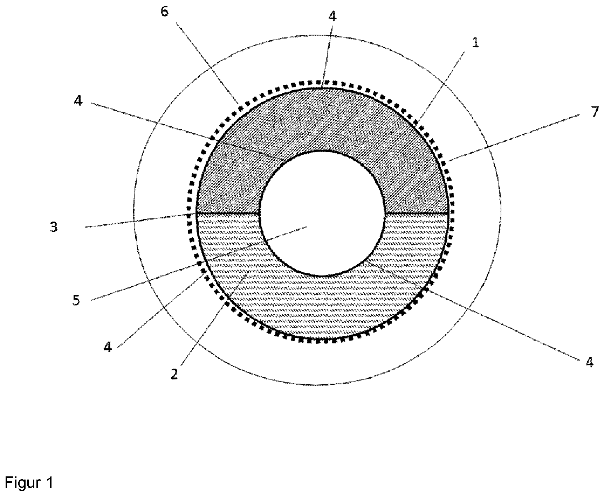

Figur 1 eine schematische Querschnitt eines erfindungsgemäßen Hydrophons.

Figur 1 zeigt das erfindungsgemäße piezokeramisches Hydrophon. Eine erste Kugelhalbschale (1) und eine zweite Kugelhalbschale (2) umfassend ein radial polarisiertes, piezoelektrisches Material (beispielsweise Blei-Zirkonat-Titanat (PZT)) sind zu einer Hohlkugel (3) zusammengesetzt., Die erste Kugelhalbschale (1) und die zweite Kugelhalbschale (2) weisen eine Außenschicht (4) auf. Die Außenschicht (4) weist (enthält) Silber und/oder Siliziumverbindungen auf. Zur Vermeidung eines Kurzschlusses können einzelne Abschnitte der Kugelhalbschalenflächen der ersten Kugelhalbschale (1) und der zweiten Kugelhalbschale (2) ohne Außenschicht (4) ausgeführt sein. Eine Polymerummantelung (6) umschließt die Hohlkugel (3) mit Hohlkugelinnenraum (5) und verhindert bzw. verlangsamt das Eindringen von Feuchtigkeit oder Schmutz. Das erfindungsgemäße Hydrophon ist dadurch gekennzeichnet, dass die Außenschicht (4) über einen Haftvermittler (7) mit der Polymerummantelung verbunden ist. Der Haftvermittler (7) umfasst bzw. enthält eine Verbindung der Formel (M¹)₂[(M²)F₆] mit M¹ = H, NH₄, Li, Na, K und M² = Ti, Zr. Der erfindungsgemäße Haftvermittler (7) erlaubt somit einen Verzicht auf Cr(VI) Verbindungen bei vergleichbarer oder besserer Haltbarkeit.

### Bezugszeichenliste

- (1): erste Kugelhalbschale
- (2): zweite Kugelhalbschale
- (3): Hohlkugel
- (4): Außenschicht
- (5): Hohlkugelinnenraum
- (6): Polymerummantelung
- (7): Haftvermittler
- (10): Trägerplatte
- (11): Leiterbahnen

## Patentansprüche

1. Piezokeramisches Hydrophon mindestens umfassend die folgenden Elemente:
- eine erste Kugelhalbschale (1) und eine zweite Kugelhalbschale (2) welche zu einer Hohlkugel (3) zusammengesetzt sind;
wobei die erste Kugelhalbschale (1) und die zweite Kugelhalbschale (2) ein radial polarisiertes, piezoelektrisches Material umfassen und die erste Kugelhalbschale (1) und die zweite Kugelhalbschale (2) eine Außenschicht (4) aufweist und die Außenschicht (4) Silber und/oder Siliziumverbindungen aufweist;
- eine elektrische Kontaktierung (5) der ersten Kugelhalbschale (1) und der zweiten Kugelhalbschale (2); und
- eine Polymerummantelung (6) der Hohlkugel (3);
**dadurch gekennzeichnet, dass** die Außenschicht (4) über einen Haftvermittler (7) mit der Polymerummantelung (6) verbunden ist und wobei der Haftvermittler (7) eine Verbindung der Formel (M¹)₂[(M²)F₆] mit M¹ = H, NH₄, Li, Na, K, Rb, Cs und M² = Ti, Zr umfasst.

2. Piezokeramisches Hydrophon nach Anspruch 1, **dadurch gekennzeichnet, dass** das radial polarisiertes, piezoelektrisches Material (9) Blei-Zirkonat-Titanat (PZT) umfasst.

3. Piezokeramisches Hydrophon nach einem der Ansprüche 1 bis 2, **dadurch gekennzeichnet, dass** die Polymerummantelung Polyurethane, Silikone, Polyester, Polyether, Polyamide enthält, bevorzugt Polyurethane enthält.

4. Piezokeramisches Hydrophon nach einem der Ansprüche 1 bis 3, **dadurch gekennzeichnet, dass** die Polymerummantelung (6) Konservierungsstoffe, Stabilisatoren und/oder Weichmacher enthält.

5. Piezokeramisches Hydrophon nach einem der Ansprüche 1 bis 4, **dadurch gekennzeichnet, dass** der Haftvermittler (7) Anti-Korrosionsmittel enthält.

6. Piezokeramisches Hydrophon nach einem der Ansprüche 1 bis 5, **dadurch gekennzeichnet, dass** die elektrische Kontaktierung (5) der ersten Kugelhalbschale (1) und der zweiten Kugelhalbschale (2) über Lötstellen erfolgt.

7. Passivsonar umfassend ein Piezokeramisches Hydrophon nach einem der Ansprüche 1 bis 6.

8. Überwasserfahrzeug oder Unterwasserfahrzeug umfassend ein Passivsonar nach Anspruch 7, bevorzugt in U-Booten, U-Booten mit AIP (air-independent-propulsion) Antrieb, ASW (anti-Submarine-warfare)-Hubschraubern, Sonarbojen, Fregatten, Zerstörern, Korvetten, Schnellboten und/oder Tauchrobotern.

9. Verfahren zur Herstellung eines Piezokeramisches Hydrophon mindestens umfassend die folgenden Schritte:
- Auftragen einer Außenschicht (4) umfassend Silber und/oder Siliziumverbindungen auf einer ersten Kugelhalbschale (1) und eine zweiten Kugelhalbschalen (2);
- Sintern und/oder Kalzinieren der Außenschicht (4);
- Auftragen eines Haftvermittler (7) umfassend eine Verbindung der Formel (M¹)₂[(M²)F₆] mit M¹ = H, NH₄, Li, Na, K, Rb, Cs und M² = Ti, Zr auf der Außenschicht (4) vor oder nach einem Zusammenfügen der ersten Kugelhalbschale (1) und der zweiten Kugelhalbschalen (2) zu einer Hohlkugel (3);
- elektrische Kontaktierung der der ersten Kugelhalbschale (1) und der zweiten Kugelhalbschalen (2) vor oder nach dem Zusammenfügen der ersten Kugelhalbschale (1) und der zweiten Kugelhalbschalen (2) zu einer Hohlkugel (3); und
- Aufbringen einer Polymerummantelung (6) um die Hohlkugel (3).

10. Verfahren nach Anspruch 9, **dadurch gekennzeichnet, dass** die Oberfläche der ersten Kugelhalbschale (1) und/oder der zweiten Kugelhalbschalen (2) und/oder die Hohlkugel (3) vor Auftragen der Außenschicht (4) grundgestrahlt werden, bevorzugt mit Korund grundgestrahlt werden.

11. Verfahren nach Anspruch 9 oder 10, **dadurch gekennzeichnet, dass** das Auftragen des Haftvermittlers (7) über Sprühverfahren, Tauchverfahren und/oder Pinselverfahren erfolgt.

12. Verwendung des Piezokeramisches Hydrophon nach einem der Ansprüche 1 bis 6 und/oder Passivsonar nach Anspruch 7 in Kriegs- und Forschungsschiffen, bevorzugt U-Booten, U-Booten mit AIP (air-independent-propulsion) Antrieb, ASW (anti-submarine-warfare)-Hubschraubern, Sonarbojen, Fregatten, Zerstörern, Korvetten, Schnellboten und/oder Tauchrobotern.

## Claims

1. A piezoceramic hydrophone comprising at least the following elements:
- a first hemispherical shell (1) and a second hemispherical shell (2) which are assembled to form a hollow sphere (3);
wherein the first hemispherical shell (1) and the second hemispherical shell (2) comprise a radially polarized, piezoelectric material (9) and the first hemispherical shell (1) and the second hemispherical shell (2) have an outer layer (4), and the outer layer (4) comprises silver and/or silicon compounds;
- an electrical contact (5) of the first hemispherical shell (1) and the second hemispherical shell (2); and
- a polymer jacket (6) around the hollow sphere (3);
**characterized in that** the outer layer (4) is joined to the polymer jacket (6) by a bonding agent (7) and wherein the bonding agent (7) comprises a compound of the formula (M¹)₂[(M²)F₆], where M¹ = H, NH₄, Li, Na, K, Rb, Cs and M² = Ti, Zr.

2. The piezoceramic hydrophone as claimed in claim 1, **characterized in that** the radially polarized, piezoelectric material (9) comprises lead zirconate titanate (PZT).

3. The piezoceramic hydrophone as claimed in either of claims 1 or 2, **characterized in that** the polymer jacket comprises polyurethanes, silicones, polyesters, polyethers, polyamides, preferably polyurethanes.

4. The piezoceramic hydrophone as claimed in any of claims 1 to 3, **characterized in that** the polymer jacket (6) comprises preservatives, stabilizers and/or plasticizers.

5. The piezoceramic hydrophone as claimed in any of claims 1 to 4, **characterized in that** the bonding agent (7) comprises corrosion inhibitors.

6. The piezoceramic hydrophone as claimed in any of claims 1 to 5, **characterized in that** the electrical contacting (5) of the first hemispherical shell (1) and the second hemispherical shell (2) is effected by solder joints.

7. A passive sonar comprising a piezoceramic hydrophone as claimed in any of claims 1 to 6.

8. A surface vessel or underwater vehicle comprising a passive sonar as claimed in claim 7, preferably in submarines, submarines having AIP (air-independent propulsion), ASW (antisubmarine warfare) helicopters, sonar buoys, frigates, destroyers, corvettes, speedboats and/or diving robots.

9. A process for producing a piezoceramic hydrophone, comprising at least the following steps:
- applying an outer layer (4) comprising silver and/or silicon compounds to a first hemispherical shell (1) and a second hemispherical shell (2);
- sintering and/or calcining the outer layer (4);
- applying a bonding agent (7) comprising a compound of the formula (M¹)₂[(M²)F₆], where M¹ = H, NH₄, Li, Na, K, Rb, Cs and M² = Ti, Zr, to the outer layer (4) before or after joining the first hemispherical shell (1) and the second hemispherical shell (2) to form a hollow sphere (3);
- electrically contacting the first hemispherical shell (1) and the second hemispherical shell (2) before or after joining the first hemispherical shell (1) and the second hemispherical shell (2) to form a hollow sphere (3); and
- applying a polymer jacket (6) around the hollow sphere (3).

10. The process as claimed in claim 9, **characterized in that** the surface of the first hemispherical shell (1) and/or of the second hemispherical shell (2) and/or of the hollow sphere (3) are abrasive-blasted, preferably with corundum, before application of the outer layer (4).

11. The process as claimed in claim 9 or 10, **characterized in that** the application of the bonding agent (7) is carried out by spray processes, dipping processes and/or brushing processes.

12. The use of the piezoceramic hydrophone as claimed in any of claims 1 to 6 and/or passive sonar as claimed in claim 7 in warships and research ships, preferably submarines, submarines having AIP (air-independent propulsion), ASW (antisubmarine warfare) helicopters, sonar buoys, frigates, destroyers, corvettes, speedboats and/or diving robots.

## Revendications

1. Hydrophone piézo-céramique comprenant au moins les éléments suivants :
- une première coque hémisphérique (1) et une deuxième coque hémisphérique (2) qui sont assemblées pour former une sphère creuse (3) ;
la première coque hémisphérique (1) et la deuxième coque hémisphérique (2) comprenant un matériau piézoélectrique polarisé radialement et la première coque hémisphérique (1) et la deuxième coque hémisphérique (2) comportant une couche extérieure (4) et la couche extérieure (4) comportant des composés de l'argent et/ou du silicium ;
- un contact électrique (5) de la première coque hémisphérique (1) et de la deuxième coque hémisphérique (2) ; et
- une enveloppe de revêtement polymère (6) de la sphère creuse (3) ;
**caractérisé en ce que** la couche extérieure (4) est reliée à l'enveloppe polymère (6) par le biais d'un promoteur d'adhérence (7) et le promoteur d'adhérence (7) comprenant un composé de formule (M¹)₂[(M²)F₆] avec M¹ = H, NH₄, Li, Na, K, Rb, Cs et M² = Ti, Zr.

2. Hydrophone piézo-céramique selon la revendication 1, **caractérisé en ce que** le matériau piézoélectrique polarisé radialement (9) comprend du titanate-zirconate de plomb (PZT).

3. Hydrophone piézo-céramique selon l'une des revendications 1 et 2, **caractérisé en ce que** l'enveloppe polymère contient des polyuréthanes, des silicones, des polyesters, des polyéthers, des polyamides, de préférence des polyuréthanes.

4. Hydrophone piézo-céramique selon l'une des revendications 1 à 3, **caractérisé en ce que** l'enveloppe polymère (6) contient des conservateurs, des stabilisants et/ou des plastifiants.

5. Hydrophone piézo-céramique selon l'une des revendications 1 à 4, **caractérisé en ce que** le promoteur d'adhérence (7) contient des agents anticorrosion.

6. Hydrophone piézo-céramique selon l'une des revendications 1 à 5, **caractérisé en ce que** le contact électrique (5) de la première coque hémisphérique (1) et de la deuxième coque hémisphérique (2) est effectué par des points de brasure.

7. Sonar passif comprenant un hydrophone piézo-céramique selon l'une des revendications 1 à 6.

8. Engin nautique de surface ou sous-marin comprenant un sonar passif selon la revendication 7, de préférence dans les sous-marins, les sous-marins à propulsion AIP (air-independent-propulsion), les hélicoptères de lutte anti-sous-marine ASW (anti-submarine warfare), les bouées sonar, les frégates, les destroyers, les corvettes, les patrouilleurs rapides et/ou les robots plongeurs.

9. Procédé de fabrication d'un hydrophone piézo-céramique, ledit procédé comprenant au moins les étapes suivantes :
- appliquer une couche extérieure (4) comprenant des composés d'argent et/ou de silicium sur une première coque hémisphérique (1) et une deuxième coque hémisphérique (2) ;
- fritter et/ou calciner la couche extérieure (4) ;
- appliquer un promoteur d'adhérence (7) comprenant un composé de formule (M¹)₂[(M²)F₆] avec M¹ = H, NH₄, Li, Na, K, Rb, Cs et M² = Ti, Zr sur la couche extérieure (4) avant ou après l'assemblage de la première coque hémisphérique (1) et de la deuxième coque hémisphérique (2) pour former une sphère creuse (3) ;
- établir un contact électrique entre la première coque hémisphérique (1) et la deuxième coque hémisphérique (2) avant ou après l'assemblage de la première coque hémisphérique (1) et de la deuxième coque hémisphérique (2) pour former une sphère creuse (3) ; et
- appliquer une enveloppe polymère (6) sur la sphère creuse (3).

10. Procédé selon la revendication 9, **caractérisé en ce que** la surface de la première coque hémisphérique (1) et/ou de la deuxième coque hémisphérique (2) et/ou de la sphère creuse (3) est soumise à un sablage, de préférence avec du corindon, avant l'application de la couche extérieure (4).

11. Procédé selon la revendication 9 ou 10, **caractérisé en ce que** le promoteur d'adhérence (7) est appliqué par un procédé de pulvérisation, d'immersion et/ou de brossage.

12. Utilisation de l'hydrophone piézo-céramique selon l'une des revendications 1 à 6 et/ou du sonar passif selon la revendication 7 dans les navires de guerre et de recherche, de préférence les sous-marins, les sous-marins à propulsion AIP (air-independent-propulsion), les hélicoptères de lutte anti-sous-marine ASW (anti-submarine-warfare), les bouées sonar, les frégates, les destroyers, les corvettes, les patrouilleurs rapides et/ou les robots plongeurs.
